# EUROPÄISCHE PATENTANMELDUNG

(11) **EP 0 663 753 A2**
(43) Veröffentlichungstag der Anmeldung: **19.07.1995**
(21) Anmeldenummer: 94116454.3
(22) Anmeldetag: 19.10.1994
(51) Int. Cl.: H04M 3/50, H04M 3/54

(54) **Verfahren zum automatischen Steuern von Anrufbeantworterfunktionen in Vermittlungssystemen**

(30) Priorität: 20.12.1993 DE 4343543
(71) Anmelder: ROBERT BOSCH GMBH, 70442 Stuttgart (DE)
(72) Erfinder: Euler, Stephan, Dr., D-63512 Hainburg (DE); Lauer, Walter, Dipl.-Ing., D-65929 Frankfurt (DE); Zinke, Joachim, Dr., D-61194 Niddatal (DE)

(57) **Zusammenfassung**

Die Anrufbeantworterfunktionen in Verbindung mit aktivierten Rufumleitungen in Vermittlungssystemen soll so gesteuert werden, daß ein Anrufer sprachliche Mitteilungen erhält über den Zustand seiner Verbindung. Dabei soll grundsätzlich eine für alle Teilnehmer gemeinsam zur Verfügung stehende Einrichtung benutzt werden, welche nicht individuell programmiert werden muß.

Im Vermittlungssystem ist ein Sprachserver (SV) vorgesehen, der beim Erreichen eines Anschlusses mit aktivierter Rufumleitung nach der automatischen Ausgabe eines Ansagetextes zusätzlich die Frage zum Anschluß eines Anrufers überträgt, ob eine Rufumleitung gewünscht wird oder nicht. In Abhängigkeit von der durch einen Spracherkenner (SE) erkannten Antwort wird entweder eine Rufumleitung durchgeführt oder eine Verbindung zum Sprachspeicher (SS) hergestellt, so daß eine kurze Mitteilung hinterlassen werden kann.

Das Verfahren zum automatischen Steuern von Anrufbeantworterfunktionen ist an zentraler Stelle so mit der Rufumleitefunktion verknüpft, daß es von allen Anschlüssen des Vermittlungssystems, die eine Rufumleitefunktion besitzen und aktiviert haben, gemeinsam gleichartig benutzt werden. Individuelle Programmierungen sind nicht notwendig, können aber durchaus bei Bedarf für einzelne Anschlüsse vorgesehen werden.

## Beschreibung

Die Erfindung betrifft ein Verfahren zum automatischen Steuern von Anrufbeantworterfunktionen in Vermittlungssystemen nach dem Oberbegriff des Patentanspruchs 1.

Unter dem Titel: "Diener am Telefon" ist in der DE-Fachzeitschrift "Funkschau" 21/1984 ab Seite 55 ein Aufsatz abgedruckt, der sich mit der Funktion eines intelligenten Anrufbeantworters beschäftigt. Mit Hilfe eines Computers und dazugehörigen Programmen wird ein Mensch-Maschine-Dialog ermöglicht. Es ist im einzelnen beschrieben, wie ein solcher Dialog ablaufen kann. Die dazu notwendige Anordnung einschließlich der Programme sind speziell auf den Anschluß des jeweiligen Benutzers abgestimmt. Es muß also im einzelnen festgelegt werden, welche Wünsche des Anrufers erkannt werden sollen und welche Antworten der in diesem Aufsatz so genannte Telefonknecht abgeben soll. Wenn eine derartige Einrichtung einem anderen Anschluß zugeordnet werden soll, so müssen sämtliche Funktionen daraufhin überprüft werden, ob sie auch für den neuen Anschluß passend sind. Alle Beantwortungsfunktionen, d. h. die sprachlich zu erkennenden Wünsche eines Anrufers und die abzugebenden Antworten müssen für jeden Benutzer individuell zusammengestellt werden.

Im DE-Fachbuch "Nachrichtenvermittlung" von Hoeckley Oden (R. Oldenburg Verlag München, Wien 1975) ist ab Seite 98 unter dem Begriff "Abwesenheitsdienste" beschrieben, welche Möglichkeiten bestehen, einem Anrufer ein Ersatzziel anzubieten, wenn er am ausgewählten gewünschten Anschluß keine Antwort erwarten kann. Es wird dort ausgesagt, daß die eintreffenden Anrufe entweder durch Nachschicken zu dem Anschluß gelenkt werden, bei dem sich der gewünschte Partner gerade aufhält, oder durch Weiterschicken zum Anschluß eines Vertreters oder zu einer neutralen Stelle (Betriebsdienstplatz) gelenkt werden. Dieses hier mit dem Begriff "Weiterschicken" aufgeführte Merkmal ist auch unter der Bezeichnung Rufumleitung bekannt, welche von dem betreffenden Benutzer selbst oder von einer übergeordneten Stelle aus aktiviert werden kann. Auf Seite 99 ist in Form von Diagrammen und Piktogrammen angegeben, wie das Nachschicken eines Anrufes zu einer anderen Stelle durch Aktivieren der sogenannten Besuchsschaltung erreicht wird. Ein Weiterschicken bzw. eine Rufumleitung wird vom Prinzip her in gleicher Weise vorgenommen, indem die betreffenden Eingaben am Endgerät des Benutzers vorgenommen werden, der dann dort nicht mehr erreichbar ist. Das Merkmal Rufumleitung wird häufig in Nebenstellenanlagen angewendet und bewirkt, daß bei seiner Aktivierung Anrufe, die an einer durch die Rufnummernwahl gekennzeichneten Stelle ankommen sollen, sofort zu einer anderen Anschlußstelle umgesteuert werden.

Bei einer derartigen Rufumleitung ist es nicht üblich, und es ist auch in dem oben erwähnten Fachbuch nicht angegeben, daß ein Anrufer über eine erfolgte Rufumleitung informiert wird. Es ist zwar denkbar, daß in modernen digitalen Nachrichtennetzen einem Anrufer seine Verbindung betreffende Informationen mitgeteilt werden, jedoch müßte er dann mit einem Endgerät ausgestattet sein, welches zumindest über eine Anzeigeeinrichtung verfügt.

Die Aufgabe der Erfindung besteht darin, ein Verfahren anzugeben, womit an zentraler Stelle angeordnete, für eine Vielzahl von Teilnehmern nutzbare Anrufbeantworterfunktionen und Rufumleitemerkmale so miteinander verknüpft werden, daß ein Anrufer über den Status seiner Verbindung sprachlich informiert wird und auch mit einfachen Spracheingaben Wünsche äußern kann.

Zur Lösung dieser Aufgabe ist eine Merkmalskombination vorgesehen, wie sie im Patentanspruch 1 angegeben ist.

Damit wird in vorteilhafter Weise erreicht, daß in einem Vermittlungssystem, beispielsweise in einer Fernsprechnebenstellenanlage, an zentraler Stelle ein Sprachserver vorhanden ist, welcher für alle Teilnehmeranschlüsse eine Anrufbeantworterfunktion ausüben kann. Dabei wird berücksichtigt, ob für diese Anschlüsse eine aktivierte Rufumleitung besteht. Eine individuelle Anpassung von Ansagetexten ist bei dieser Anordnung nicht notwendig, aber durchaus realisierbar.

Weiterbildung der Erfindung ergeben sich aus den Unteransprüchen.

Ein Ausführungsbeispiel der Erfindung wird nachfolgend anhand von Zeichnungen näher erläutert.

Es zeigt
- Figur 1: das Blockschaltbild eines Vermittlungssystems mit zentraler Anrufbeantworterfunktion und Rufumleitung
- Figur 2: das Ablaufdiagramm einer Anrufbeantworterfunktion bei aktivierter Rufumleitung

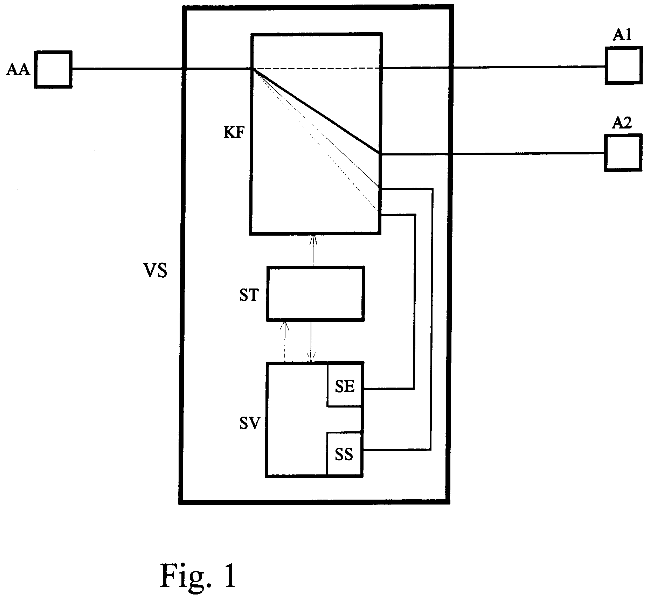

In der Figur 1 ist ein Vermittlungssystem VS dargestellt, welches im wesentlichen ein Koppelfeld KF und eine dazugehörige Steuerung ST enthält. Zusätzlich ist ein Sprachserver SV vorgesehen, welcher unter anderem einen Sprachspeicher SS und einen Spracherkenner SE enthält.

Es sei angenommen, daß von einem Anschluß AA eines Anrufers eine Verbindung aufgebaut werden soll, die entsprechend der gewählten Rufnummer zu einem gewünschten Anschluß A1 führen soll. Wenn für diesen Anschluß A1 eine Rufumleitung, beispielsweise zum Anschluß A2 eines persönlichen Vertreters aktiviert ist, so wird in bekannter Weise eine Rufumleitung durchgeführt. Vorher wird jedoch der Sprachserver SV über das Koppelfeld KF mit dem Anschluß AA des Anrufers verbunden. Dabei wird eine im Sprachspeicher SS befindliche Ansage übermittelt, womit der Anrufer darüber verständigt wird, daß die von ihm gewünschte Person nicht erreichbar ist. Eine solche Ansage könnte beispielsweise lauten: "Herr M ist derzeit nicht erreichbar. Sie können aber mit seinem persönlichen Vertreter, Herrn N, sprechen. Wenn Sie dies wünschen, so antworten Sie mit ja; falls Sie nur eine Nachricht für Herrn M hinterlassen wollen, so antworten Sie mit nein." Nach der Durchgabe dieser Ansage wird der im Sprachserver SV befindliche Spracherkenner SE an die Verbindung zum anrufenden Anschluß AA angeschaltet. Der Spracherkenner SE ist so ausgelegt, daß eine sprecherunabhängige Einzelworterkennung möglich ist.

Der Sprachserver SV wird immer dann aktiviert, wenn die Steuerung ST erkennt, daß für einen gewünschten Anschluß, z. B. A1, eine Rufumleitung aktiviert ist. Sprachspeicher SS und Spracherkenner SE werden daraufhin innerhalb des Koppelfeldes KF mit dem Anschluß des Anrufers AA verbunden. Wenn der Spracherkenner SE nach Durchgabe des Ansagetextes das vom Anrufer gesprochene Wort "ja" erkannt hat, so wird ein Befehl an die Steuerung ST gegeben, damit die Rufumleitung durchgeführt wird. Die Verbindung wird dann in bekannter Weise innerhalb des Koppelfeldes KF so geschaltet, daß der Anschluß AA des Anrufers mit dem Anschluß A2 des persönlichen Vertreters verbunden wird.

Sollte sich dabei herausstellen, daß ein Anschluß, im Beispiel A2, zu dem eine Rufumleitung durchgeführt werden soll, besetzt ist, so wird dies von der Steuerung ST an den Sprachserver SV gemeldet. Der Sprachserver SV überträgt daraufhin einen im Sprachspeicher SS befindlichen Ansagetext, der wie folgt lauten könnte: "Der Anschluß von Herrn N ist leider besetzt, so daß keine Verbindung möglich ist. Sie haben die Möglichkeit, eine kurze Mitteilung zu hinterlassen. Bitte sprechen Sie jetzt." Dabei wird der Sprachspeicher SS auf Empfang geschaltet, so daß eine vom Anrufer abgegebene sprachliche Mitteilung empfangen werden kann und gespeichert wird.

Falls die umgeleitete Verbindung zum Anschluß A2 nicht zustande kommt, weil sich der persönliche Verteter nicht meldet, so wird nach Ablauf einer im Sprachserver SV befindlichen Zeitüberwachung ein entsprechender Ansagetext an den Anschluß AA des Anrufers übermittelt. Im Anschluß daran wird, wie bereits zuvor beschrieben worden ist, dem Anrufer die Möglichkeit gegeben, eine sprachliche Mitteilung zu hinterlassen.

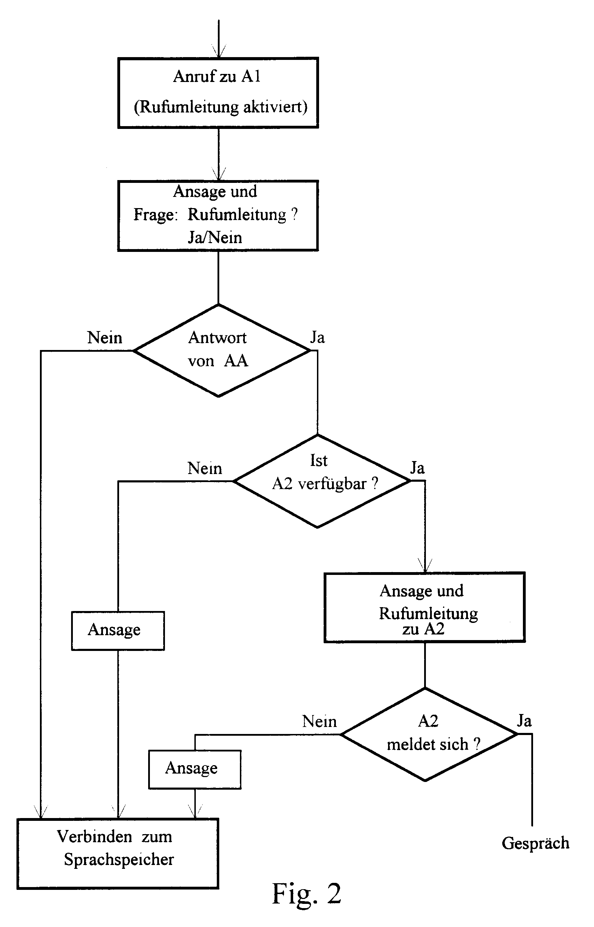

Die einzelnen Verfahrensschritte werden nun nochmals anhand der Figur 2 kurz erläutert. Nach dem Anruf zum gewünschten Anschluß A1, wo eine Rufumleitung aktiviert ist, wird die Ansage und die Frage, ob eine Rufumleitung gewünscht wird, zum Anrufer übertragen. In Abhängigkeit von dessen Antwort wird entweder eine Rufumleitung zum Anschluß A2 des Vertreters eingeleitet oder es folgt eine direkte Verbindung zum Sprachspeicher, damit dort eine Mitteilung aufgenommen werden kann. Wenn sich bei der Durchführung der Rufumleitung herausstellt, daß der Anschluß A2, zu dem umgeleitet werden soll, nicht frei ist, so erfolgt ebenfalls eine Verbindung zum Sprachspeicher, wobei dem Anrufer eine entsprechende Ansage übermittelt wird. Das gleiche geschieht, wenn die Rufumleitung durchgeführt wurde und der persönliche Vertreter sich nicht meldet.

Abweichend von dem in Figur 2 dargestellten Ablauf kann das Verfahren auch so abgeändert werden, daß schon beim Erreichen des gewünschten Anschlusses A1 und bei der Feststellung, daß eine Rufumleitung aktiviert ist, geprüft werden, ob der ersatzweise anzusteuernde Anschluß A2 verfügbar ist. Ist dies nicht der Fall, so braucht die Frage, ob eine Rufumleitung gewünscht wird, gar nicht erst gestellt werden. Das Symbol (Raute) "ist A2 verfügbar?" würde dann in der Figur 2 direkt nach dem "Anruf zu A1" einzuordnen sein.

Wenn eine Rufumleitung zum Anschluß A2 des Vertreters durchgeführt worden ist, dieser sich aber nicht meldet, wird nach einer vorbestimmten Zeit, z. B. 20 Sek., die umgeleitete Verbindung getrennt. Es erfolgt eine Verbindung des Anschlusses AA mit dem Sprachspeicher SS, so daß der anrufende Teilnehmer die Möglichkeit hat, eine Mitteilung zu hinterlassen.

## Patentansprüche

1. Verfahren zum automatischen Steuern von Anrufbeantworterfunktionen in Vermittlungssystemen, wobei einem Anrufer Ansagetexte übermittelt werden, die ihn über das erreichte Ziel seiner Verbindung informieren und ein Dialog zwischen dem Anrufer und dem Vermittlungssystem stattfindet, und wobei Rufumleitefunktionen im Vermittlungssystem vorgesehen sind,
**dadurch gekennzeichnet,**
daß im Vermittlungssystem ein Sprachserver (SV) vorgesehen ist, der beim Erreichen eines Anschlusses (A1) mit aktivierter Rufumleitung (RU) nach der automatischen Ausgabe eines entsprechend formulierten Ansagetextes zusätzlich die Frage zum Anschluß des Anrufers (AA) überträgt, ob eine Rufumleitung (RU) zum Anschluß (A2) eines persönlichen Vertreters gewünscht wird,
daß bei einer negativen Antwort (Nein), die von einem im Sprachserver (SV) befindlichen Spracherkenner (SE) erkannt wird, sofort eine Verbindung zu einem Sprachspeicher (SS) hergestellt wird, damit der Anrufer dort eine Nachricht hinterlassen kann,
daß bei einer positiven Antwort (Ja) eine Rufumleitung stattfindet, wobei der Status des betreffenden Anschlusses (A2) im Vermittlungssystem (VS) abgefragt wird und nur dann die Rufumleitung (RU) durchgeführt wird, wenn dieser Anschluß (A2) frei ist,
und daß der Anschluß des Anrufers (AA) mit dem Sprachspeicher (SS) verbunden wird, wenn eine Rufumleitung nicht stattfinden kann, wobei eine entsprechende Ansage zum Anschluß des Anrufers (AA) übertragen wird.

2. Verfahren nach Anspruch 1,
**dadurch gekennzeichnet,**
daß innerhalb des Sprachservers (SV) eine Zeitüberwachung vorgesehen ist, nach deren Ablauf die Rufumleitungsverbindung (RU) getrennt und eine Verbindung zwischen dem Anschluß des Anrufers (AA) und dem Sprachspeicher (SS) aufgebaut wird, wobei dem Anrufer eine entsprechende Ansage übermittelt wird.

3. Verfahren nach Anspruch 1,
**dadurch gekennzeichnet,**
daß sofort nach dem Anruf geprüft wird, ob der Anschluß (A2), zu dem umgeleitet werden soll, frei ist, und daß die Frage nach einer gewünschten Rufumleitung (RU) nicht zum Anschluß des Anrufers (AA) übertragen wird, wenn der betreffende Anschluß (A2) nicht verfügbar ist.
